# EUROPÄISCHE PATENTSCHRIFT

(11) **EP 2 607 114 B1**
(45) Veröffentlichungstag und Bekanntmachung des Hinweises auf die Patenterteilung: **22.10.2014**
(21) Anmeldenummer: 11010148.2
(22) Anmeldetag: 22.12.2011
(51) Int. Cl.: B60D 5/00, B61D 17/22, B62D 47/02

(54) **Übergang zwischen zwei gelenkig miteinander verbundenen Fahrzeugen eines Gelenkfahrzeugs**
Transition between two loose jointed vehicles of an articulated vehicle
Passerelle entre deux voitures d'un véhicule articulé reliées entre elles de manière articulée

(43) Veröffentlichungstag der Anmeldung: 26.06.2013
(73) Patentinhaber: Hübner GmbH & Co. KG, 34123 Kassel (DE)
(72) Erfinder: Eckert, Michael, 34132 Kassel (DE); Schuster, Heinz, 34123 Kassel (DE)
(74) Vertreter: Walther, Walther & Hinz GbR

(56) Entgegenhaltungen:
- CH-A- 415 309
- DE-U1- 8 910 106
- DE-U1- 29 915 425
- DE-U1-202004 004 029

## Beschreibung

Die Erfindung betrifft einen Übergang zwischen zwei gelenkig miteinander verbundenen Fahrzeugen eines Gelenkfahrzeugs, umfassend einen Balg und eine Übergangseinrichtung, wobei der Balg durch einen Mittelrahmen in zwei Balghälften geteilt ist, wobei der Mittelrahmen des Balges etwa in der Winkelhalbierenden zentrierbar ist.

Aus der CH 415 309 A ist eine Mittenzentrierung bekannt, bei der ein zwischen zwei Balghälten angeordneter Jochbogen durch vier federgelagerte Stangen mittig zwischen den beiden Fahrzeugenteilen gehalten wird, wobei die Stangen an den jeweiligen Fahrzeugen durch Drehfedern befestigt sind. Die Stangen sind hierbei im Bereich der Fahrzeugaußenwand an den jeweiligen Fahrzeugen angeordnet und laufen auf die Mitte des Jochbogens zu, wo sie durch eine Platte mit dem Jochbogen verbunden sind.

Aus der DE 299 15 425 U1 ist eine Führungsanordnung für einen Faltenbalgmittelrahmen bei einem Gelenkfahrzeug bekannt, wobei der Mittelrahmen durch ein Zwangsführungsgetriebe, das einerseits mit den beiden Fahrzeugteilen in Verbindung steht, und andererseits am Mittelrahmen befestigt ist, geführt zentriert wird.

Ein Übergang der eingangs genannten Art ist aus dem Stand der Technik z. B. bei einem Gelenkbus mit einer Plattform als Übergangseinrichtung bekannt. Übergangsbrücken als Übergangseinrichtungen sind auch von Schienenfahrzeugen bekannt, wobei im Folgenden als Fahrzeuggelenk jede gelenkige Verbindung zwischen zwei Schienenfahrzeugen verstanden wird, also auch z. B. Kupplungen. Bei einer Plattform ist auf der Unterseite der Plattform ein sogenannter Plattformträger vorgesehen, wobei sich der Träger quer zur Mittellängsachse des Fahrzeugs zwischen den Seitenteilen des Mittelrahmens des U-förmig umlaufenden Balges erstreckt. Der Plattformträger ist mit den Seitenteilen des Mittelrahmens durch sogenannte Metallgummilager verbunden. Mittig, d. h., in der Knickachse des Gelenkes ist der Plattformträger drehbar an dem Gelenk des Fahrzeugs angeordnet. Zwischen Plattformträger und Gelenk befindet sich eine Steuereinrichtung, die dafür sorgt, dass sowohl der Plattformträger als auch der Mittelrahmen winkelhalbierend angesteuert werden.

Es ist nun bekannt, im Bereich des Balges an dem Mittelrahmen Haltestangen anzuordnen. Die Haltestangen erstrecken sich nicht nur in Richtung quer zur Mittellängsachse des Fahrzeugs, sondern weisen endseitig auch Ausleger auf, die sich in etwa parallel zur Mittellängsachse am Balg entlang erstrecken. Fährt nun ein solches Gelenkfahrzeug und hier insbesondere ein Bus um eine enge Kurve, so besteht die Gefahr, dass ein Fahrgast auf der Kurveninnenseite in den Bereich zwischen den Ausleger der Haltestange einerseits und dem Seitenwandbereich des Balges andererseits eingeklemmt wird.

Darüber hinaus besteht dann, wenn ein solcher Bus durch eine enge Kurve fährt auf der Kurvenaußenseite die Gefahr, dass der Balg in Kontakt mit in die Hüllkurve des Fahrzeugs ragenden Gegenständen gelangt, was zur Folge hat, dass der Balg hierbei Schaden nimmt. Dies deshalb, weil der Balg im Wesentlichen starr durch das Metallgummilager an dem Plattformträger angeordnet ist, der wiederum starr in der Knickachse des Fahrzeugs drehbar befestigt ist. Das heißt, der Balg hat auch keine Chance, einem Kraftangriff von außen auf den Balg auszuweichen.

Die der Erfindung zugrunde liegende Aufgabe besteht nunmehr darin, eine Mittelrahmenzentrierung für einen Balg bei einem Übergang der eingangs genannten Art vorzusehen, wobei der Balg in der Lage sein soll, bei Kollision mit einem Hindernis dem Hindernis in gewissem Umfang auszuweichen.

Zur Lösung der Aufgabe dienen die Merkmale des Anspruchs 1. Hierbei wird bei einem Übergang der eingangs genannten Art erfindungsgemäß vorgeschlagen, dass zur Zentrierung des Mittelrahmens in der Winkelhalbierenden eine Rasteinrichtung mit einem Rastglied und einer Rastaufnahme für das Rastglied vorgesehen ist, wobei das an dem Mittelrahmen angeordnete Rastglied mit der mit der Übergangseinrichtung in Verbindung stehenden Rastaufnahme in ausrückbarem Eingriff steht. Das heißt, das Rastglied steht mit dem Mittelrahmen in Verbindung; die Rastaufnahme befindet sich auf der Oberseite der Übergangseinrichtung, z. B. der Übergangsplattform oder Übergangsbrücke. Unter Einwirkung einer aus horizontaler Richtung einwirkenden Kraft auf die eine oder die andere Balghälfte kann der Balg einem solchen Krafteingriff durch Veränderung der Lage des Mittelrahmens ausweichen. Hieraus wird deutlich, dass egal ob durch eine horizontal auf die eine Balghälfte einwirkende Kraft von innen oder von außen der Balg in Abhängigkeit von der Größe der Kraft in der Lage ist, einem solchen Kraftangriff auszuweichen. Dies hat zur Folge, dass Beschädigungen am Balg vermieden werden, wenn der Balg beispielsweise bei Kurvenfahrt außen an einem in die Hüllkurve des Fahrzeugs hineinragenden Gegenstand hängen bleibt. Auch werden Einklemmkräfte auf Personen, die sich im Bereich der Haltestangen am Mittelrahmen befinden, reduziert.

Grundsätzlich gilt, dass im Sinne einer kinematischen Umkehr auch eine Ausführungsform unter den Schutzbereich des Anspruchswortlautes fallen soll, bei der das Rastglied nicht am Mittelrahmen, sondern an der Übergangseinrichtung und korrespondierend hierzu die Rastaufnahme an dem Mittelrahmen angeordnet ist.

Vorteilhafte Merkmale ergeben sich aus den Unteransprüchen.

Um die Zentrierung nach einer Auslenkung wieder wirksam werden zu lassen, kann das Rastglied z. B. manuell mit der Rastaufnahme in Eingriff gebracht werden. Allerdings wird auch dann, wenn z. B. der Gelenkbus auf der Seite des Übergangs, wo die Auslenkung stattgefunden hat, durch eine enge Kurve fährt, der Mittelrahmen durch Zusammendrücken des Balges zentriert, was zur Folge hat, dass das Rastglied quasi automatisch wieder in Eingriff mit der Rastaufnahme gelangt. Gleiches geschieht auch auf der Kurvenaußenseite, wenn durch den großen Auszug der Balghälften entsprechende innere Kräfte aufgebaut werden, die dafür sorgen, dass das Rastglied wieder in die Rastaufnahme gelangt.

Im Einzelnen ist in Bezug auf die Rastaufnahme vorgesehen, dass die Rastaufnahme auf der Oberseite eine konkave Wölbung aufweist, wobei vorteilhaft die Rastaufnahme, die genau in der Winkelhalbierenden auf der als Plattform oder Brücke ausgebildeten Übergangseinrichtung angeordnet ist, zu beiden Seiten der konkaven Wölbung eine Rampe zeigt. Das Rastglied, das insbesondere als Rastrolle ausgebildet ist, hat insofern die Möglichkeit nach einer Auslenkung aus der konkaven Wölbung der Rastaufnahme über die Rampe wiederum in die konkave Wölbung zu gelangen, wie dies oben beschrieben wurde. In dem Moment, in dem sich das Rastglied in der konkaven Wölbung befindet, ist der Balg in der Winkelhalbierenden zentriert.

Nach einem besonders vorteilhaften Merkmal ist vorgesehen, dass die Rastrolle entgegen der Kraft einer Federeinrichtung, z. B. einer Spiralfeder im Einbauzustand in etwa vertikaler Richtung auslenkbar ist. Es hat sich herausgestellt, dass auch ohne eine solche Feder sowohl das Aus- als auch das wieder Einlaufen in die konkave Wölbung der Rastaufnahme möglich ist, allein aufgrund der dem Balg eigenen Elastizität. Es ist allerdings so, dass das Auslenken der Rolle aus der konkaven Wölbung zu einem dumpfen Schlag der Rastrolle auf z. B. der Plattform führt, was die Passagiere erschrickt. Durch eine federbelastete Rastrolle, wie dies bereits zuvor beschrieben worden ist, erfolgt die Überführung der Rastrolle aus der konkaven Wölbung sowohl heraus und auch wieder hinein in besonders sanfter Weise, d. h., das Auftreten von dumpfen Schlaggeräuschen, wie zuvor beschrieben, ist dann nicht mehr zu befürchten.

Im Einzelnen ist konstruktiv vorgesehen, dass das Rastglied durch einen auf das Zentrum oder die Mittellängsachse des Übergangs zugerichteten Ausleger mit dem Mittelrahmen des Balges in Verbindung steht. Eine Plattform als eine Ausführungsform einer Übergangseinrichtung ist zwischen den beiden gelenkig miteinander verbundenen Fahrzeugteilen, beispielsweise eines Gelenkbusses, über dem Fahrzeuggelenk angeordnet. Die Plattform umfasst hierbei zwei scheibenförmige Plattformelemente, die einen seitlichen Abstand zur Seitenwand des Balges des Überganges aufweisen. Um diesen Abstand abzudecken, ist eine sogenannte Boden- oder Spurfugenabdeckung vorgesehen, die ebenfalls nach Art eines Faltenbalges ausgebildet ist. Eine solche Bodenabdeckung ist bekannt. Sie weist eine gleiche Faltenteilung auf wie der damit verbundene Übergangsbalg. Auch insofern gibt es bei der Bodenabdeckung ähnlich, wie bei dem Balg einen Mittelrahmen der sich z. B. trapezförmig in den Innenraum des Übergangs erstreckt. Hierbei stellt der sich parallel auf der Unterseite der Bodenabdeckung zur Plattform erstreckende Schenkel des trapezförmig ausgebildeten Mittelrahmens der Bodenabdeckung einen Ausleger dar, an dem das Rastglied also z. B. eine Rastrolle angeordnet ist. Das heißt, dass sich der Balg über diesen Ausleger und über das Rastglied bzw. die Rastrolle auf der Plattform abstützt. An dieser Stelle sei daran erinnert, dass beim Stand der Technik die Abstützung des Balges durch den Mittelrahmen des Balges und durch den durch die Knickachse geführten Plattformträger erfolgt, wobei der Plattformträger auf dem Fahrzeuggelenk in der Knickachse des Gelenkfahrzeugs drehbar gelagert ist. Durch den Plattformträger findet insofern, da dieser in der Knickachse drehbar mit dem Gelenk verbunden ist, auch eine drehbare Fixierung des Mittelrahmens des Balges in der Knickachse als Hochachse statt. Auch bei der Erfindung ist nun vorgesehen, dass der Mittelrahmen des Balges in der Knickachse des Fahrzeugs drehbar am Gelenk des Fahrzeugs fixiert ist. Hierzu weist der Mittelrahmen unterhalb des Gelenks des Fahrzeugs eine sich quer zur Fahrzeuglängsachse erstreckende Traverse auf, wobei die Traverse durch eine Gelenkvorrichtung mit dem Gelenk des Fahrzeugs verbunden ist. Hieraus folgt, dass die Anbindung des Mittelrahmens des Übergangsbalges von unten an das Gelenk des Fahrzeugs erfolgt. Das heißt, dass sich die Gelenkvorrichtung in der Knickachse des Fahrzeugs findet. Insofern dient nicht wie beim Stand der Technik der Plattformträger der Mittenzentrierung des Balges in der Knickachse des Fahrzeugs; vielmehr ist die bereits erwähnte Traverse vorgesehen, die sich quer zur Mittellängsachse des Fahrzeugs zwischen den Seitenteilen des Mittelrahmens erstreckt, wobei auf der Traverse die Gelenkvorrichtung in der Knickachse des Fahrzeugs bzw. des Gelenks angeordnet und mit dem Fahrzeuggelenk verbunden ist.

Anhand der Zeichnungen wird sowohl die Erfindung als auch der Stand der Technik nachstehend näher erläutert.
- Fig. 1: zeigt in perspektivischer Darstellung einen zwischen zwei Fahrzeugen angeordneten Übergang, wobei die Fahrzeuge lediglich angedeutet sind;
- Fig. 2: zeigt einen Übergang aus dem Stand der Technik in einer Frontansicht;
- Fig. 3: zeigt eine Ansicht gemäß Fig. 2 auf den erfindungsgemäßen Übergang;
- Fig. 4: zeigt in einem Ausschnitt die Rasteinrichtung auf der Plattform im Bereich der Bodenabdeckung;
- Fig. 5: zeigt eine Ansicht gemäß Fig. 4 in vergrößerter Darstellung;
- Fig. 6: zeigt eine perspektivische Ansicht von unten in Richtung der Plattform.

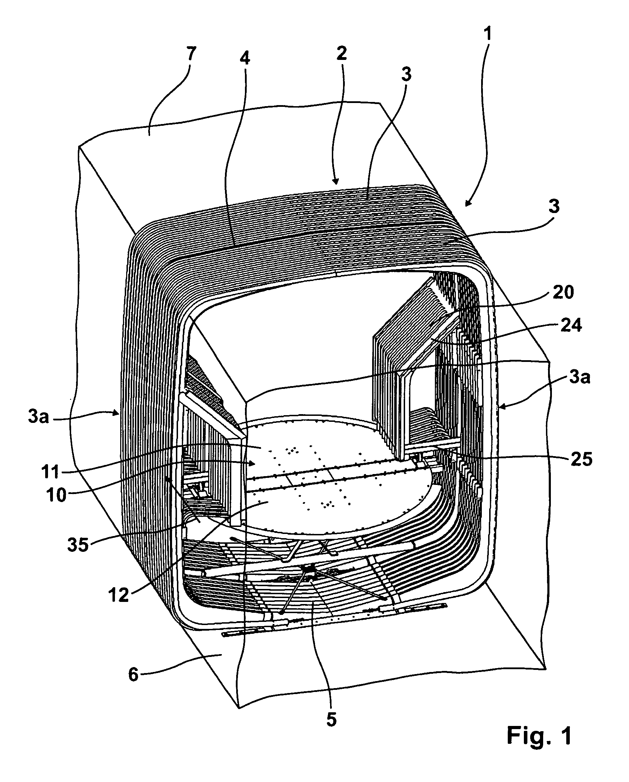

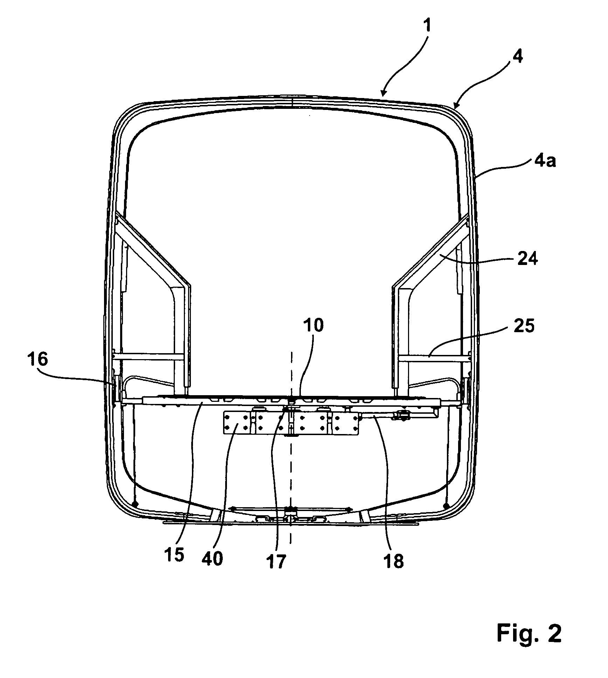

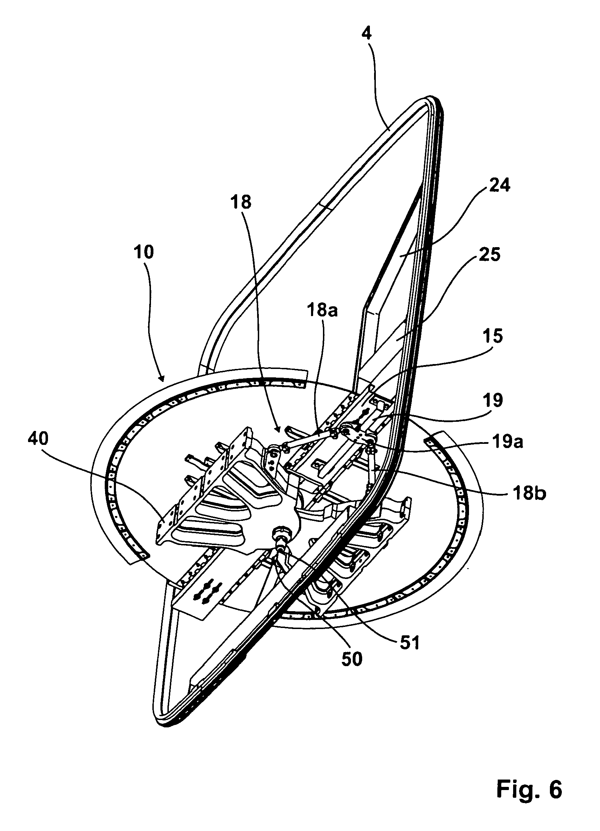

Fig. 1 zeigt den insgesamt mit 1 bezeichneten Übergang zwischen zwei Fahrzeugen 6, 7, der sich zusammensetzt aus dem insgesamt mit 2 bezeichneten Balg sowie der innerhalb des Balges angeordneten Plattform 10. Unterhalb der Plattform befindet sich das Fahrzeuggelenk 40. Der Balg 2 umfasst zwei im Wesentlichen identische Balghälften 3, die durch den Mittelrahmen 4 miteinander in Verbindung stehen. Der Balg selbst ist tunnelartig umlaufend ausgebildet, und besitzt im Bodenbereich das Bodentuch 5, das die Balgenden miteinander verbindet. Die Plattform 10, die aus den beiden Plattformhälften 11 und 12 gebildet ist, zeigt einen seitlichen Abstand zu der jeweiligen Seitenwand 3a der Balghälften. Zur Überbrückung dieses Abstandes dient die Bodenabdeckung 20 auch Spurfugenabdeckung genannt. Die Bodenabdeckung 20 ist in gleicher Weise in Falten geteilt, wie auch die Balghälften 3 bzw. der Balg 2. Auch die Bodenabdeckung 20 weist mittig einen Mittelrahmen 24 auf, der mit dem Mittelrahmen 4 des Balges verbunden ist, der die beiden Balghälften 3 verbindet. Der zuvor beschriebene Aufbau findet sich sowohl beim Stand der Technik (Fig. 2) als auch bei der Erfindung wieder. Bevor auf die Erfindung eingegangen wird, sei anhand der Fig. 2 kurz den Stand der Technik erläutert. Der mit 1 bezeichnete Übergang besitzt die Plattform 10, wobei sich unter der Plattform 10 der Plattformträger 15 befindet. Der Plattformträger 15 ist zu beiden Enden durch Metallgummilager 16 mit den Seitenteilen 4a des Mittelrahmens 4 verbunden. Der Plattformträger 15 ist darüber hinaus mittig über die Drehachse 17 mit dem Fahrzeuggelenk 40 verbunden. Die Drehachse 17 liegt in der Knickachse des Fahrzeugs. Zwischen Fahrzeuggelenk einerseits und Plattformträger 15 andererseits ist unterhalb der Plattform eine Steuereinrichtung 18 vorgesehen. Die Steuereinrichtung 18 umfasst zwei Steuerstangen 18a, 18b, die jeweils gelenkig mit ihrem einen Ende am Fahrzeuggelenk angeordnet sind. Am Plattformträger 15 befindet sich eine Führungsstange 19, wobei die Führungstange 19 einen Schlitten 19a aufweist, an dem die Steuerstangen 18a, 18b mit ihrem anderen Ende ebenfalls gelenkig angeordnet sind. Der Schlitten 19a ist entlang der Führungsstange 19 beweglich durch die Führungsstange aufgenommen (Fig. 6). Durch diese Konstruktion wird erreicht, dass bei Knickung des Fahrzeuggelenks über die Steuerstangen der Plattformträger immer in der Winkelhalbierenden gehalten wird. Infolgedessen befindet sich auch der Mittelrahmen immer in der Winkelhalbierenden. In Abwandlung zu dieser dreieckförmigen Anordnung der Steuerstangen zu einer Seite des Gelenks ist auch eine Variante vorstellbar, bei der jeweils eine Steuerstange zu jeweils einer Seite des Gelenks, vorteilhaft diagonal einander gegenüberliegend, am Fahrzeuggelenk einerseits und an jeweils einer Führungsstange andererseits verschieblich angeordnet ist. Die Führungsstangen befinden sich an der Unterseite des Plattformträgers.

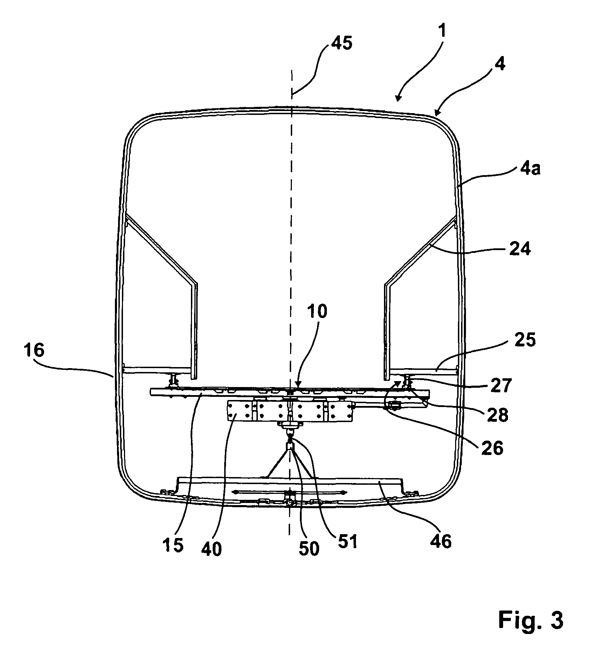

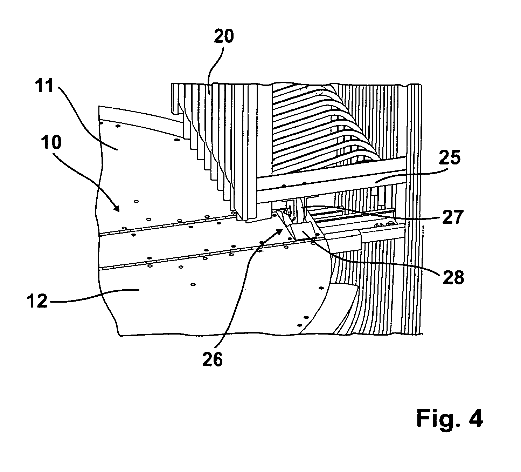

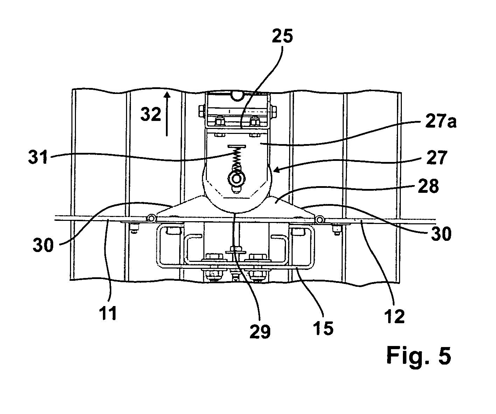

Bei der Erfindung (Figuren 3 bis 5) besitzt der Mittelrahmen 24 der Bodenabdeckung einen Ausleger 25, wobei an dem Ausleger 25 die Rastrolle 27 angeordnet ist. Der Ausleger kann Teil der Bodenabdeckung sein und kann insofern an dem Mittelrahmen 24 angelenkt sein. Des Weiteren ist der Ausleger mit dem Seitenteil 4a des Mittelrahmens 4 des Balges 2 verbunden. Die Rastrolle 27 arbeitet mit der Rastaufnahme 28 zusammen, die auf der als Plattform ausgebildeten Übergangseinrichtung angeordnet ist. Rastrolle und Rastaufnahme bilden die Rasteinrichtung 26. In diesem Zusammenhang wird verwiesen auf die Figuren 4 und 5. Aus Fig. 5 ist insbesondere die Ausbildung der Rastaufnahme 28 erkennbar, und zwar insofern, als die Rastaufnahme 28 eine konkave Wölbung 29 und zu jeder Seite der konkaven Wölbung 29 eine Rampe 30 aufweist. Die Rastrolle 27 ist in dem Halter 27a entgegen der Kraft einer Feder 31 in vertikaler Richtung (Pfeil 32) auslenkbar gelagert.

Die Funktionsweise der Rasteinrichtung umfassend das Rastglied in Form der Rastrolle 27 und der Rastaufnahme 28 stellt sich kurz wie folgt dar:
Erfährt eine Balghälfte z. B. eine Krafteinwirkung von außen auf den Balg tangential aus horizontaler Richtung gekennzeichnet durch den Pfeil 35 in Fig. 1, dann wird bei Überschreiten einer bestimmten Kraft die Rastrolle 27 aus der konkaven Wölbung 29 herausgelangen, und die Rampe 30 hinab auf die Plattform 10 rollen. Bei Einwirkung einer Kraft in entgegengesetzter Richtung wird die Rolle dann wieder in die konkave Wölbung 29 gelangen, was beispielsweise der Fall ist, wenn die Seite des Balges, auf der die Rastrolle 27 aus der Rastaufnahme gelangt ist, auf der Innenseite einer Kurve liegt; denn wird hierbei der Balg auf der Innenseite der Kurve auf Block zusammengedrückt, hat dies zur Folge, dass die Rolle 27 in die konkave Wölbung 29 der Rastaufnahme 28 zurückgelangt. Wird auf der Kurvenaußenseite der Balg gedehnt, so gelangt durch die hierdurch entstehende Kraft die Rolle ebenfalls zurück in die Rastaufnahme. Denkbar ist ebenfalls, dass durch eine Kombination beider Kräfte, also sowohl von der Innen- als auch von der Außenseite, die jeweiligen Rollen in ihre Rastaufnahmen zurückgelangen.

Betrachtet man nun noch einmal die Fig. 3, so erkennt man unterhalb der Plattform 10 das Fahrzeuggelenk 40. Die Plattform 10 stützt sich über entsprechende Lager 15 auf dem Fahrzeuggelenk 40 ab. Die Knickachse des Gelenks 40 ist mit 45 bezeichnet. Es ist dafür Sorge zu tragen, dass der Balg um die gleiche Achse knickt, wie das Fahrzeuggelenk auch. Insofern ist erforderlich, dass der Balg und hier insbesondere der Mittelrahmen des Balges in der Knickachse gelagert ist. Hierzu weist der Mittelrahmen 4 oberhalb des Bodentuches eine Traverse 46 auf, die mit dem Mittelrahmen verbunden ist. Auf der Traverse 46 befindet sich die mit 50 bezeichnete Gelenkvorrichtung, die mit der Unterseite des Fahrzeuggelenkes 40 in Verbindung steht. Die Gelenkvorrichtung besitzt das Drehgelenk 51. Die Aufgabe der Gelenkvorrichtung besteht ausschließlich darin, den Mittelrahmen durch die Anlenkung an der Traverse 46 einerseits und an dem Fahrzeuggelenk 40 in der Knickachse 45 andererseits auszurichten. Das heißt, es muss dafür Sorge getragen werden, dass die Mittelhochachse des Mittelrahmens 4 mit der Knickachse 45 des Fahrzeuggelenks zusammenfällt.

### Bezugszeichenliste:

- 1: Übergang
- 2: Balg
- 3: Balghälfte
- 3a: Seitenwand des Balges 2
- 4: Mittelrahmen des Balges des Übergangs
- 4a: Seitenteile des Mittelrahmens
- 5: Bodentuch
- 6: Fahrzeug
- 7: Fahrzeug
- 10: Plattform (Übergangseinrichtung)
- 11: Plattformhälfte
- 12: Plattformhälfte
- 15: Plattformträger
- 16: Metallgummilager
- 17: Drehachse
- 18: Steuereinrichtung
- 18a, 18b: Steuerstange
- 19: Führungsstange
- 19a: Schlitten
- 20: Bodenabdeckung
- 24: Mittelrahmen der Bodenabdeckung
- 25: Ausleger
- 26: Rasteinrichtung
- 27: Rastrolle
- 27a: Halter der Rastrolle
- 28: Rastaufnahme
- 29: konkave Wölbung der Rastaufnahme
- 30: Rampe der Rastaufnahme
- 31: Feder der Rastrolle
- 35: Pfeil
- 40: Fahrzeuggelenk
- 45: Knickachse
- 46: Traverse
- 50: Gelenkvorrichtung
- 51: Drehgelenk

## Patentansprüche

1. Übergang (1) zwischen zwei gelenkig miteinander verbundenen Fahrzeugen (6, 7) eines Gelenkfahrzeugs, umfassend einen Balg (2) und eine Übergangseinrichtung, wobei der Balg durch einen Mittelrahmen (4) in zwei Balghälften (3) geteilt ist, wobei der Mittelrahmen (4) des Balges (2) etwa in der Winkelhalbierenden zentrierbar ist,
**dadurch gekennzeichnet,**
**dass** die Übergangseinrichtung als Übergangsplattform (10) oder Übergangsbrücke ausgebildet ist und
**dass** zur Zentrierung des Mittelrahmens (4) in der Winkelhalbierenden eine Rasteinrichtung (26) mit einem Rastglied und einer Rastaufnahme (28) für das Rastglied vorgesehen ist, wobei das mit dem Mittelrahmen verbundene Rastglied mit der Rastaufnahme (28) in unter Einwirkung einer aus horizontaler Richtung einwirkenden Kraft ausrückbaren Eingriff steht, wobei die Rastaufnahme (28) an der Übergangsbrücke oder Übergangsplattform angeordnet ist.

2. Übergang nach Anspruch 1 oder 2, **dadurch gekennzeichnet, dass** die Rastaufnahme (28) auf der Oberseite eine konkave Wölbung (29) für das Rastglied aufweist.

3. Übergang nach Anspruch 2, **dadurch gekennzeichnet, dass** die Rastaufnahme (28) zu beiden Seiten der konkaven Wölbung (29) eine Rampe aufweist.

4. Übergang nach einem der voranstehenden Ansprüche, **dadurch gekennzeichnet, dass** das Rastglied als Rastrolle (27) ausgebildet ist.

5. Übergang nach Anspruch 4,
**dadurch gekennzeichnet,**
**dass** die Rastrolle (27) entgegen der Kraft einer Federeinrichtung (31) in vertikaler Richtung auslenkbar ist.

6. Übergang nach einem der voranstehenden Ansprüche,
**dadurch gekennzeichnet,**
**dass** das Rastglied durch einen auf die Mittellängsachse des Übergangs zugerichteten Ausleger (25) mit dem Mittelrahmen (4) in Verbindung steht.

7. Übergang nach Anspruch 6,
**dadurch gekennzeichnet,**
**dass** der Ausleger (25) Teil der an der Seitenwand (3a) des Balges (2) angeordneten Bodenabdeckung (20) ist.

8. Übergang nach einem der voranstehenden Ansprüche,
**dadurch gekennzeichnet,**
**dass** der Mittelrahmen (4) um die Knickachse (45) des Gelenkfahrzeugs drehbar an einem Fahrzeuggelenk (40) des Gelenkfahrzeugs angeordnet ist.

9. Übergang nach Anspruch 8,
**dadurch gekennzeichnet,**
**dass** die Übergangseinrichtung auf dem Fahrzeuggelenk (40) des Gelenkfahrzeugs drehbar gelagert ist.

10. Übergang nach Anspruch 8 oder 9,
**dadurch gekennzeichnet,**
**dass** der Mittelrahmen unterhalb des Fahrzeuggelenks (40) eine sich quer zur Fahrzeuglängsachse erstreckende Traverse (46) aufweist, wobei die Traverse (46) durch eine Gelenkvorrichtung (50) mit dem Fahrzeuggelenk (40) des Gelenkfahrzeugs verbunden ist.

11. Übergang nach Anspruch 10, **dadurch gekennzeichnet, dass** sich die Gelenkvorrichtung (50) in der Knickachse (45) des Gelenkfahrzeugs befindet.

## Claims

1. A transition (1) between two articulately connected vehicles (6, 7) of an articulated vehicle, comprising a bellows (2) and a transition device, wherein the bellows is divided into two bellows halves (3) by a central frame (4), wherein the central frame (4) of the bellows is centerable on the bisector,
**characterized in that**
the transition device is configured as a transition platform (10) or a transition bridge and
that for centring the central frame (4) in the bisector, a catch device (26) with a catch member and a catch seat (28) for the catch member is provided, wherein the catch member connected to the central frame is disengageably engaged with the catch seat (28) under the application of a horizontally acting force, wherein the catch seat (28) is disposed on the transition bridge or transition platform.

2. The transition according to claim 1 or 2, **characterized in that** the catch seat (28) has a concave curvature (29) for the catch member on its upper side.

3. The transition according to claim 2, **characterized in that** the catch seat (28) has a ramp on both sides of the concave curvature (29).

4. The transition according to one of the afore-mentioned claims, **characterized in that** the catch member is configured as a catch roll (27).

5. The transition according to claim 4,
**characterized in that**
the catch roll (27) is deflectable in the vertical direction against the force of a spring device (31).

6. The transition according to one of the afore-mentioned claims,
**characterized in that**
the catch member is connected to the central frame (4) by way of an extension arm (25) oriented toward the central longitudinal axis of the transition.

7. The transition according to claim 6,
**characterized in that**
the extension arm (25) is part of the floor cover (20) disposed on the lateral wall (3a) of the bellows (2).

8. The transition according to one of the afore-mentioned claims,
**characterized in that**
the central frame (4) is disposed on the vehicle articulation (40) of the articulated vehicle so as to be rotatable around the bending axis (45) of the articulated vehicle.

9. The transition according to claim 8,
**characterized in that**
the transition device is rotatably mounted on the vehicle articulation (40) of the articulated vehicle.

10. The transition according to claim 8 or 9,
**characterized in that**
the central frame has a crossbeam (46) under the vehicle articulation (40) extending perpendicularly to the longitudinal axis of the vehicle, wherein the crossbeam (46) is connected to the vehicle articulation (40) by way of an articulation device (50).

11. The transition according to claim 10, **characterized in that** the articulation device (50) is located on the bending axis (45) of the articulated vehicle.

## Revendications

1. Passerelle (1) entre deux voitures articulées (6, 7) d'un véhicule articulé, couplées entre elles, comportant un soufflet (2) et une installation de traversée, dans lequel le soufflet est divisé en deux demi-soufflets (3) au moyen d'un cadre central (4), dans lequel le cadre central (4) du soufflet (2) peut être centré sensiblement dans les extrémités des moitiés angulaires,
**caractérisée en ce que**,
l'installation de traversée constitue une plateforme traversante (10) ou un pont de traversée et,
que, pour le centrage du cadre central (4) un dispositif d'enclenchement (26) est prévu, dans les extrémités des moitiés angulaires comportant un organe d'enclenchement et un élément récepteur (28) pour l'organe d'enclenchement, dans lequel organe d'enclenchement couplé audit élément récepteur (28) est prévu pour l'organe d'enclenchement, dans lequel
l'organe d'enclenchement couplé audit cadre central est en prise de façon rétractable avec l'élément récepteur (28), sous l'action d'une force appliquée selon une direction horizontale, dans lequel l'élément récepteur (28) est disposé sur le pont de traversée de la plateforme traversante.

2. Passerelle selon les revendications 1 ou 2,
**caractérisée en ce que**,
l'élément récepteur (28) comporte une voûte concave (29) sur la face supérieure pour l'organe d'enclenchement.

3. Passerelle selon la revendication 2,
**caractérisée en ce que**,
l'élément récepteur (28) comporte une rampe des deux côtés de la voûte concave (29).

4. Passerelle selon l'une des revendications précédentes,
**caractérisée en ce que**,
l'organe d'enclenchement est constitué d'un rouleau d'enclenchement (27).

5. Passerelle selon la revendication 4,
**caractérisée en ce que**,
le rouleau d'enclenchement (27) peut être dévié selon une direction verticale à l'encontre de la force d'un dispositif à ressort (31).

6. Passerelle selon une des revendications précédentes,
**caractérisée en ce que**,
l'organe d'enclenchement est en liaison avec le cadre central (4) par l'intermédiaire d'un bras (25) orienté en direction de l'axe central de la passerelle.

7. Passerelle selon la revendication 6,
**caractérisée en ce que**,
le bras (25) constitue une partie du revêtement de sol (20) disposé sur la paroi latérale (3a) du soufflet (2).

8. Passerelle selon l'une des revendications précédentes,
**caractérisée en ce que**,
le cadre central (4) est rotatif autour de l'axe de pliage (45) du véhicule articulé par rapport à une articulation (40) du véhicule articulé.

9. Passerelle selon la revendication 8,
**caractérisée en ce que**,
l'installation de passerelle est montée en rotation sur une articulation (40) du véhicule articulé.

10. Passerelle selon l'une des revendications 8 ou 9,
**caractérisée en ce que**,
le cadre central comporte une traverse (46) disposée en-dessous de l'articulation (40) du véhicule, disposée transversalement par rapport à l'axe longitudinal du véhicule, dans lequel la traverse (46) est couplée par une installation d'articulation (50) avec l'articulation (40) du véhicule articulé.

11. Passerelle selon la revendication 10,
**caractérisée en ce que**,
l'installation d'articulation (50) se trouve dans l'axe de pliage (45) du véhicule articulé.
